# EUROPÄISCHE PATENTSCHRIFT

(11) **EP 0 883 765 B1**
(45) Veröffentlichungstag und Bekanntmachung des Hinweises auf die Patenterteilung: **08.11.2000**
(21) Anmeldenummer: 97903367.7
(22) Anmeldetag: 24.02.1997
(51) Int. Cl.: F16K 17/38

(54) **THERMISCHE ARMATURENSICHERUNG ZUM AUTOMATISCHEN ABSPERREN VON LEITUNGEN**
THERMAL SAFETY DEVICE FOR AUTOMATICALLY BLOCKING PIPES
SYSTEME DE SECURITE THERMIQUE POUR BLOCAGE AUTOMATIQUE DE CONDUITES

(30) Priorität: 04.03.1996 DE 19608165
(43) Veröffentlichungstag der Anmeldung: 16.12.1998
(73) Patentinhaber: Mertik Maxitrol GmbH & Co. KG, 06502 Thale (DE)
(72) Erfinder: SCHULZE, Klaus, D-06507 Gernrode (DE)
(74) Vertreter: Albrecht, Günter
(86) Internationale Anmeldenummer: EP9700880
(87) Internationale Veröffentlichungsnummer: WO9733111

(56) Entgegenhaltungen:
- DE-A- 4 422 241
- DE-U- 7 737 537
- US-A- 3 720 220

## Beschreibung

### Technisches Gebiet

Die Erfindung betrifft eine thermische Armaturensicherung zum automatischen Absperren von Leitungen, insbesondere von Gasleitungen, beim Auftreten einer unzulässigen Temperaturerhöhung nach dem Oberbegriff des ersten Patentanspruches.

### Stand der Technik

Solche thermischen Armaturensicherungen, die in Rohrleitungen, wie zum Beispiel vor Gasarmaturen, Gasgeräten, Gaszählern usw., eingesetzt werden, gibt es in einer Vielzahl von Ausführungen. Sie dienen dazu, bei einer Temperaturerhöhung die Gaszufuhr zu unterbrechen, bevor die Temperatur an den genannten Gasgeräten so hoch wird, daß deren äußere Dichtheit gefährdet ist.

So ist in der DE - OS 44 22 241 eine thermische Armaturensicherung der eingangs genannten Art beschrieben. Bei dieser Lösung ist im Gehäuse in axialer Verlängerung eines in ihm befindlichen Sitzes ein Schließkörper durch mindestens ein etwa U-förmig gebogenes Formteil in der Offenstellung gehalten. Der Schließkörper weist dazu im Anschluß an einen dem Sitz zugewandten Dichtungsbereich auf seiner dem Sitz abgewandten Seite eine Einschnürung auf, an die sich ein vorzugsweise zylindrischer Bund anschließt. Die beiden Schenkel des Formteiles befinden sich dabei im Bereich der Einschnürung und bilden so gegen die Kraft der Schließfeder eine Auflage für den Bund. Der die beiden Schenkel verbindende Teil des Formteiles stützt sich desweiteren an einem Thermolot ab, das seinerseits an der Innenwand des Gehäuses anliegt. Beim Wegschmelzen des Thermolotes befinden sich die Schenkel des Formteiles auf Grund der damit verbundenen Lageänderung des Formteiles im Gehäuse nicht mehr in der Einschnürung des Schließkörpers, so daß der Schließkörper unter der Einwirkung der Schließfeder seine Schließstellung einnimmt. Dabei bilden die Schenkel jeweils eine auf den Sitz gerichtete Führungsbahn für den Bund und/oder den Dichtungsbereich des Schließkörpers.

Bei dieser Lösung ist es von Nachteil, daß das Gehäuse neben dem Schließkörper viele Einbauten insbesondere im Umströmungsquerschnitt des Schließkörpers besitzt. Um die zum Beispiel in Normen festgeschriebenen oder in der Praxis gewünschten Durchflußwerte zu erreichen, ist man deshalb gezwungen die Baugröße entsprechend festzulegen. Das hat wiederum zur Folge, daß insbesondere für den Einbau ebenfalls geforderte und/oder gewünschte Baumaße nicht eingehalten werden können.

Desweiteren ist aus der EP - PS 605 551 ein sogenanntes Brandschutzventil mit Schließfeder zum automatischen Absperren von Leitungen bekannt. Bei diesem Brandschutzventil ist in einem Gehäuse ein metallischer Schließkörper angeordnet, der im Dichtungsbereich eine kugelförmige Gestalt besitzt, mit der er unter der Kraft einer Schließfeder in geöffneter Stellung auf drei Festpunkten, die durch zwei Kugeln und einem temperaturempfindlichen Bauelement gebildet werden, aufliegt. Dabei weisen die beiden Kugeln, die sich ihrerseits auf einem Absatz im Gehäuse abstützen, zueinander einen solchen Abstand auf, daß sie einen Öffnungswinkel von ca. 90° bilden. Gegenüber diesem Öffnungswinkel ist an der Innenwand des Gehäuses das temperaturempfindliche Bauelement befestigt.

Dieses besteht aus einem nach innen offenen Napf, der mit seinem Napfboden an der Innenwand befestigt ist. In dem radial nach innen offenen Napf befindet sich ein Schmelzlot, in das eine mit der Öffnung des Napfes eine Spielpassung bildende Kugel eingepreßt ist, die den dritten Festpunkt bildet. und die so bemessen ist, daß sie sich bei fehlendem Schmelzlot annähernd vollständig im Napf befindet. Der durch die drei Festpunkte gebildete Auflagedurchmesser für den metallischen Schließkörper ist dabei so bemessen, daß der Schließkörper, wenn sich die Kugel im Napf befindet, auf Grund der wirkenden Kraft der Schließfeder durch die zwischen den drei Festpunkten entstehende vergrößerte Öffnung hindurchgedrückt wird.

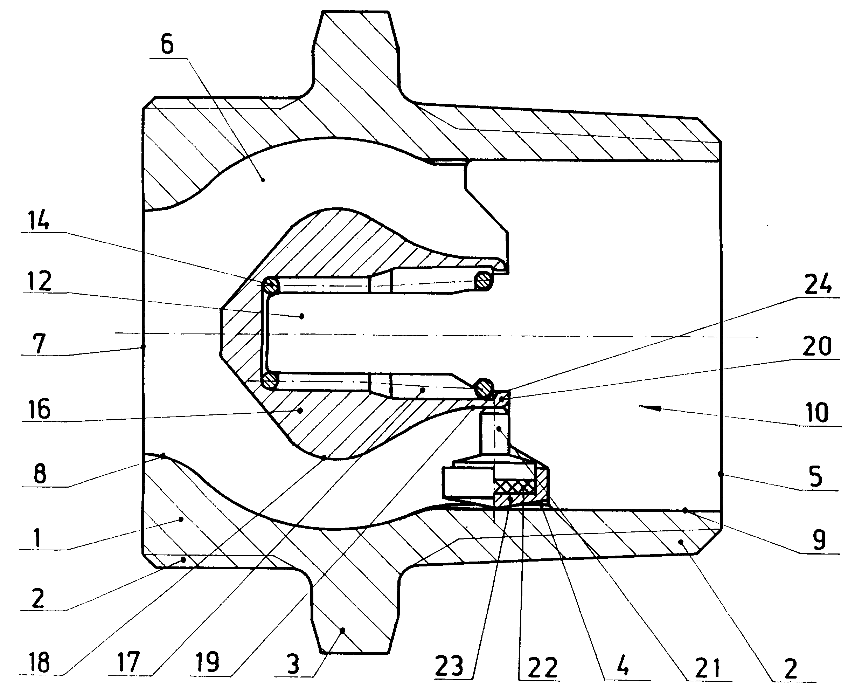

Wie auch aus der zugehörigen Figur 1 sehr gut zu erkennen ist, ist es bei dieser Lösung von Nachteil, daß der außermittig gelagerte Schließkörper bei der Durchführung der Schließbewegung nicht axial geführt ist. Wegen der auf Grund der vorhandenen Toleranzen niemals vollkommen axial wirkenden Kraftrichtung der Schließfeder kommt es bei der Schließbewegung der Kugel zu deren seitlicher Auslenkung. Der dadurch zwangsweise entstehende seitliche Aufprall und die damit notwendige Zentrierungsbewegung in den Sitz verbrauchen einen Teil der für die Erzielung eines Preßsitzes erforderlichen kinetischen Energie. Dieser Preßsitz ist jedoch erforderlich, wenn die thermische Armaturensicherung auch noch bei Temperaturen wirksam sein soll, bei denen die Schließfeder bereits kraftlos ist.

Eine ähnliche Lösung ist in der EP - OS 574 677 beschrieben. Bei dieser Sicherheitsgassteckdose ist innerhalb des Gehäuses ein Haltering gelagert, in oder an dem ein drehsymmetrisches Schließteil anliegt, dessen größter Außendurchmesser nur wenig größer ist als der Innendurchmesser des Halterings. Dabei wird das Schließteil durch ein Federelement gegen den Haltering in Richtung eines Dichtsitzes gedrückt. Der Haltering besteht aus einem Material, das bei einer vorgewählten, bestimmten Temperatur soweit erweicht, daß das Schließteil durch das Federelement durch den Haltering hindurchgedrückt wird und in Verbindung mit einem Sitz den Gasdurchfluß absperrt.

Obwohl bei dieser Lösung eine axiale Lagerung in der Offenstellung erreicht ist, kann es auf Grund der auch bei dieser Lösung fehlenden axialen Führung der Kugel bei der Schließbewegung nicht verhindert werden, daß es wie bei der weiter oben beschriebenen Lösung zu einer seitlichen Auslenkung des Schließkörpers kommen kann mit dem bereits genannten Nachteil.

Aus dem DE - GM 90 17 534 ist eine weitere thermische Armaturensicherung mit demselben Nachteil bekannt. Bei dieser ist im Gehäuse ein mit einem Haltebolzen gegen eine Druckfeder vorgespannter Schließkegel angeordnet. Während der Haltebolzen mit seinem ersten Ende am Schließkegel befestigt ist, stützt er sich mit seinem zweiten Ende, dessen Durchmesser vergrößert ist, auf einem Schmelzkörper ab, durch dessen mittige Öffnung der Haltebolzen hindurchragt.

Eine im Aufbau ähnliche Vorrichtung zum Absperren von Leitungen, die in der DE - OS 39 16 100 beschrieben ist, versucht diesem Nachteil dadurch zu begegnen, daß der Haltebolzen mittels eines separaten Führungsteiles mittig gehalten wird. Hierbei ist es von Nachteil, daß neben dem zusätzlichen Bauteil ein hoher Fertigungsaufwand getrieben werden muß. Um eine ausreichende Führung zu gewährleisten erhöht sich außerdem die Baugröße.

Ein Absperrventil für Brenngas-Rohrleitungen der eingangs genannten Art ist in dem DE - GM 77 37 537 beschrieben. Dieses Absperrventil ist mit einer in einem Ventildeckel geführten, von einer Druckfeder belasteten Ventilstange, einem gegen einen Ventilsitz zur Anlage kommenden Ventilteller und einem Schmelzkörper versehen, der den Ventilteller in der Offenstellung hält. In der Druckfeder ist ein Führungsstift angeordnet, der mit einem zwischen Ventildeckel und Ventilstange liegenden Stützteller versehen ist, so daß die Druckfeder im ausgefahrenen Zustand der Ventilstange im Ventilgehäuse geführt wird. Dabei stützt sich der Führungsstift mit seinem Stützteller genau am Ventildeckel ab, so daß ein Verkanten vermieden wird.

Bei dieser Lösung ist es von Nachteil, daß das Gehäuse einen T-förmigen Aufbau besitzt, wodurch das Absperrventil aus dem vorhandenen Rohrleitungsprofil herausragt.

### Darstellung der Erfindung

Der Erfindung liegt das Problem zugrunde, eine thermische Armaturensicherung der genannten An zu entwickeln, die im Bereich des Schließkörpers einen ungestörten Ringquerschnitt aufweist. Desweiteren soll die axiale Führung des Schließkörpers bei seiner Schließbewegung gewährleistet sein. Der Herstellungsaufwand und die Baugröße sind so gering wie möglich zu halten. Weiterhin soll die Armaturensicherung so konzipiert sein, daß daß sie keine Bauteile aufweist, die aus dem Rohrleitungsprofil herausragen.

Erfindungsgemäß wird das Problem dadurch gelöst, daß sich im Gehäuse in axialer Verlängerung eines in ihm befindlichen Sitzes ein Führungsdorn befindet. Auf diesem Führungsdorn ist eine Schließfeder angeordnet, die sich im gespannten Zustand weitestgehend in einer eine als Steuerkante dienende Einschnürung aufweisenden Sacklochbohrung des Schließkörpers befindet. Unter der Einwirkung eines einem Fühlerelement zugehörigen Stößels. der sich einerseits an einem an der Innenwand des Gehäuses anliegenden Thermolot und andererseits an der Außenfläche des Schließkörpers im Bereich der Steuerkante derart abstützt, daß sich der Bereich der Steuerkante außermittig befindet, liegt die Steuerkante in Offenstellung der thermischen Armaturensicherung unter der Einwirkung der Schließfeder an einer Rastkante an. Beim Wegschmelzen des Thermolotes liegt dagegen die Steuerkante auf Grund der damit verbundenen Lageänderung des Stößels nicht mehr an der Rastkante an, so daß der Schließkörper unter der Einwirkung der Schließfeder seine Schließstellung einnimmt. Dabei bildet der Führungsdorn eine auf den Sitz gerichtete Führungsbahn für die Schließfeder, und diese wiederum dient als Führung für den Schließkörper.

Damit wurde eine Lösung gefunden, mit der der bisherige Nachteil des Standes der Technik, daß das Gehäuse neben dem Schließkörper viele Einbauten insbesondere im Umströmungsquerschnitt des Schließkörpers besitzt, beseitigt. Weiterhin zeichnet sich diese Lösung vor allen Dingen durch ihre Einfachheit aus.

Um den Umströmungsquerschnitt optimal zu gestalten, ist es besonders vorteilhaft, wenn die als Steuerkante dienende Einschnürung in der Sacklochbohrung am dem Sitz abgewandten Ende des Schließkörpers angeordnet ist, und wenn außerdem der Außendurchmesser des Schließkörpers im Bereich der Steuerkante wesentlich geringer ist als der Durchmesser des Sitzes.

Weitere vorteilhafte Ausgestaltungen der Erfindung gehen aus den anderen Patentansprüchen hervor. So erweist es sich als besonders vorteilhaft, wenn der Führungsdorn durch ein Blechformteil gebildet wird, dessen Flächen parallel zur in Strömungsrichtung liegenden Gehäuseachse und damit auch parallel zur Innenwand des Gehäuses verlaufen. Damit wird durch das Blechformteil nur ein minimaler Strömungswiderstand erzeugt. An seinem dem Schließkörper abgewandten Ende ist das Blechformteil mittels einer beidseitigen Verbreiterung vorzugsweise durch Pressung mit dem Gehäuse verbunden, wobei die dazu notwendige beidseitige Verbreiterung gleichzeitig jeweils eine Auflageschulter für die Schließfeder bildet. Auch ist es möglich, die Rastkante mit in das Blechformteil zu integrieren.

Eine besonders günstige Lösung ergibt sich, wenn die Rastkante durch das dem Sitz abgewandte Ende der Schließfeder gebildet wird. Der Führungsdorn weist dann zusätzlich mindestens eine Ausnehmung für das Aufrasten des dem Sitz abgewandten Endes der Schließfeder auf.

Weiterhin erweist es sich insbesondere aus Montagegründen als vorteilhaft, wenn das Gehäuse zwei gegenüberliegende Führungsnuten zur Aufnahme der Verbreiterungen des Blechformteiles vorzugsweise unter den Bedingungen eines Preßsitzes aufweist.

Aus strömungstechnischen, aber auch aus Montagegründen ist es vorteilhaft, wenn sich der Stößel parallel zu seiner Längsachse einseitig an der Verbreiterung des Blechformteiles abstützt.

### Ausführungsbeispiel

Die Erfindung wird nachstehend an einem Ausführungsbeispiel näher beschrieben. Es zeigen:
- Fig. 1: eine erfindungsgemäße thermische Armaturensicherung im Schnitt in Offenstellung
- Fig. 2: eine separate Darstellung einer Ausführungsmöglichkeit eines Blech formteiles.

Die nachfolgend näher erläuterte und in der Figur 1 dargestellte erfindungsgemäße thermische Armaturensicherung besitzt ein rohrförmiges Gehäuse 1, das an beiden Enden jeweils einen Anschluß aufweist, der in diesem Fall jeweils durch ein Außengewinde dargestellt ist. Es versteht sich von selbst, daß auch ein anderer Anschluß möglich ist. Zwischen den beiden Anschlußgewinden 2 weist das Gehäuse 1 einen äußeren Sechskant 3 auf, der beim Einbauen in eine nicht dargestellte Gasleitung zur Aufnahme eines Schraubenschlüssels oder eines ähnlichen Werkzeuges dient.

In Verlängerung der Einströmöffnung 5 schließt sich im Gehäuse 1 ein rohrförmiger Bereich 4 an, der aus strömungstechnischen Gründen in eine Erweiterung 6 übergeht. Dabei ist die Kontur der Erweiterung 6 der Kontur eines weiter unten näher beschriebenen Schließkörpers 16 so angepaßt, daß ein optimaler Strömungsverlauf entsteht. An die Erweiterung 6 schließt sich der vor der Ausströmöffnung 7 angeordnete Sitzbereich 8 an. Im Bereich des rohrförmigen Bereiches 4 befinden sich zwei gegenüberliegende Führungsnuten 9, die zur Aufnahme von Verbreiterungen 11 eines Blechformteiles 10 dienen, die in die Führungsnuten 9 eingepreßt sind. Es hat sich dabei als günstig erwiesen, die Verbreiterungen 11 mit einer leichten Einführungsschräge zu versehen, um die Montage zu erleichtern.

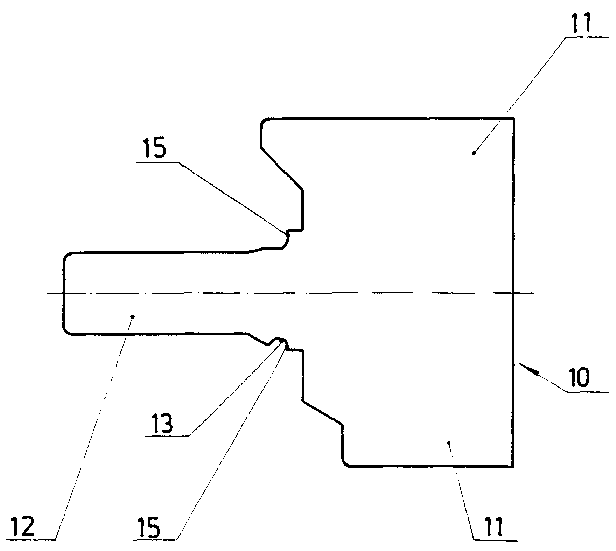

Das Blechformteil 10 ragt mit seinem zentrisch angeordneten Führungsdorn 12 in die Erweiterung 6 des Gehäuses 1. Der Führungsdorn 12 besitzt, wie aus Fig. 2 zu erkennen ist, an seinem den Verbreiterungen 11 zugewandten Ende einseitig eine Ausnehmung 13, die zum Aufrasten eines Endes einer als Schließfeder 14 dienenden Druckfeder dient, dessen Funktion als Rastkante 24 weiter unten näher erläutert wird, wobei sich das Federende ansonsten an einer jeweils auf den Verbreiterungen 11 befindlichen Auflageschulter 15 abstützt.

Im Bereich der Erweiterung 6 des Gehäuses 1 befindet sich ein Schließkörper 16, der in diesem Ausführungsbeispiel einen kugelförmigen Dichtbereich 18 aufweist, der in Richtung der Ausströmöffnung 7, ebenfalls aus strömungstechnischen Gründen, etwa konisch ausläuft. In Richtung der Einströmöffnung 5 geht der kugelförmige Dichtbereich 18 in einen halsförmigen Bereich 19 über, dessen Außendurchmesser wesentlich geringer ist als der Durchmesser des Sitzes 8. In der der Einströmöffnung 5 zugewandten Stirnseite ist der Schließkörper 16 mit einer Sacklochbohrung 17 versehen, die die Schließfeder 14 in gespannter Lage, d.h. in Offenstellung, weitestgehend vollständig aufnimmt und in derem Grund sich die durch den Führungsdorn 12 geführte Schließfeder 14 abstützt. In unmittelbarer Nähe der Stirnseite weist die Sacklochbohrung 17 eine umlaufende Einschnürung auf, deren Funktion als Steuerkante 20 weiter unten näher erläutert wird.

Auf der Außenfläche des halsförmigen Bereiches 19 stützt sich in dem Bereich der Steuerkante 20, der sich im Eingriffsbereich der weiter oben bereits erläuterten Rastkante 24 befindet, die Stirnseite eines Stößels 21 eines Fühlerelementes ab, der mit seinem anderen Ende auf einem Thermolot 22 aufliegt. Das Thermolot 22 ist günstigerweise in einem Napf 23 deponiert, der sich an der Innenwand des Gehäuses 1 abstützt und dabei teilweise in eine Führungsnut 9 hineinragt. Dabei ist die Gesamtlänge des Fühlerelementes so bemessen, daß sich durch den Stößel 21 der Schließkörper 16 im Bereich der Steuerkante 20 so weit außermittig befindet, daß sich die Steuerkante 20 unter der Kraft der Schließfeder 14 an dem in der Ausnehmung 13 eingerasteten als Rastkante 24 dienenden Federende abstützt.

Die Wirkungsweise der erfindungsgemäßen thermischen Armaturensicherung ist wie folgt:

Beim Auftreten einer unzulässigen Temperaturerhöhung kommt es zum Schmelzen des Thermolotes 22. Damit wird der Stößel 21 unter der Kraft der Schließfeder 14 in den Napf 23 gedrückt. Auf Grund dieser Lageänderung des Stößels 21 gleitet die Steuerkante 20 von der Rastkante 24 und der Schließkörper 16 wird durch die Kraft der Schließfeder 14 mit seinem kugelförmigen Dichtungsbereich 18 in den Sitzbereich 8 gedrückt.

Während der Schließbewegung wird der Schließkörper 16 durch die Schließfeder 14, und diese wiederum durch den Führungsdorn 12 in axialer Richtung geführt, so daß radiale Auslenkungen des Schließkörpers 16, und die damit verbundenen negativen Auswirkungen auf die Dichtwirkung, vermieden werden.

Die erfindungsgemäße Armaturensicherung ist selbstredend nicht auf das dargestellte Ausführungsbeispiel beschränkt. Vielmehr sind Änderungen und Abwandlungen möglich, ohne den Rahmen der Erfindung zu verlassen. So können beispielsweise die mit Außengewinde dargestellten Anschlüsse auch Innengewinde oder einen Flansch aufweisen. Ferner kann der kugelförmige Dichtungsbereich 18 auch zum Beispiel kegelförmig ausgeführt sein. Desweiteren ist es auch möglich, die Rastkante 24 in das Blechformteil 10 zu integrieren.

### Aufstellung der Bezugszeichen

- 1: Gehäuse
- 2: Anschlußgewinde
- 3: Sechskant
- 4: Rohrförmiger Bereich
- 5: Einströmöffnung
- 6: Erweiterung
- 7: Ausströmöffnung
- 8: Sitz
- 9: Führungsnut
- 10: Blechformteil
- 11: Verbreiterung
- 12: Führungsdorn
- 13: Ausnehmung
- 14: Schließfeder
- 15: Auflageschulter
- 16: Schließkörper

- 17: Sacklochbohrung
- 18: Dichtbereich
- 19: Halsförmiger Bereich
- 20: Steuerkante
- 21: Stößel
- 22: Thermolot
- 23: Napf
- 24: Rastkante

## Patentansprüche

1. Thermische Armaturensicherung zum automatischen Absperren von Leitungen, insbesondere von Gasleitungen, beim Auftreten einer unzulässigen Temperaturerhöhung, mit einem in einem Gehäuse (l) befindlichen metallischen Schließkörper (16), wobei der Schließkörper (16) unter der Kraft einer in Schließrichtung wirkenden Schließfeder (14) mittels eines ein Thermolot (22) aufweisenden Fühlerelementes in Offenstellung gehalten wird und mit einem im Gehäuse (1) in axialer Verlängerung eines in ihm befindlichen Sitzes (8) befindlichen Führungsdorn (12), der eine auf den Sitz (8) gerichtete Führungsbahn für die auf ihm angeordnete Schließfeder (14) bildet, dadurch gekennzeichnet, daß sich die Schließfeder (14) im gespannten Zustand weitestgehend in einer eine als Steuerkante (20) dienende Einschnürung aufweisenden Sacklochbohrung (17) des Schließkörpers (16) befindet. und daß die Steuerkante (20) unter der Einwirkung eines dem Fühlerelement zugehörigen Stößels (21), der sich einerseits an einem an der Innenwand des Gehäuses (1) anliegenden Thermolot (22) und andererseits an der Außenfläche des Schließkörpers (16) im Bereich der Steuerkante (20) derart abstützt, daß sich der Bereich der Steuerkante (20) außermittig befindet, in Offenstellung unter der Einwirkung der Schließfeder (14) an einer Rastkante (24) anliegt, wohingegen beim Wegschmelzen des Thermolotes (22) auf Grund der damit verbundenen Lageänderung des Stößels (21) die Steuerkante (20) nicht mehr an der Rastkante (24) anliegt, so daß der Schließkörper (16) unter der Einwirkung der Schließfeder (14) seine Schließstellung einnimmt, wobei die Schließfeder (14) als Führung für den Schließkörper (16) dient.

2. Thermische Armaturensicherung zum automatischen Absperren von Leitungen nach Patentanspruch 1. dadurch gekennzeichnet, daß die als Steuerkante (20) dienende Einschnürung in der Sacklochbohrung ( 17) am dem Sitz (8) abgewandten Ende des Schließkörpers (16) angeordnet ist, und daß der Außendurchmesser des Schließkörpers (16) im Bereich der Steuerkante (20) wesentlich geringer ist als der Durchmesser des Sitzes (8).

3. Thermische Armaturensicherung zum automatischen Absperren von Leitungen nach Patentanspruch 1 oder 2, dadurch gekennzeichnet, daß der Führungsdorn (12) durch ein Blechformteil (10) gebildet wird, das an seinem dem Schließkörper (16) abgewandten Ende mittels beidseitiger Verbreiterungen (11) vorzugsweise durch Pressung mit dem Gehäuse (1) verbunden ist, wobei die Verbreiterungen (11) desweiteren jeweils eine Auflageschulter (15) für die Schließfeder (14) bilden.

4. Thermische Armaturensicherung zum automatischen Absperren von Leitungen nach Patentanspruch 3, dadurch gekennzeichnet, daß das Blechformteil (10) die Rastkante (24) aufweist.

5. Thermische Armaturensicherung zum automatischen Absperren von Leitungen nach einem der Patentansprüche 1 bis 3, dadurch gekennzeichnet, daß die Rastkante (24) durch das dem Sitz (8) abgewandte Ende der Schließfeder (14) gebildet wird, wobei der Führungsdorn (12) mindestens eine Ausnehmung (13) für ein Aufrasten des dem Sitz (8) abgewandten Endes der Schließfeder (14) aufweist.

6. Thermische Armaturensicherung zum automatischen Absperren von Leitungen nach einem der Patentansprüche 3 bis 5, dadurch gekennzeichnet, daß das Gehäuse (1) zwei gegenüberliegende Führungsnuten (9) zur Aufnahme der Verbreiterungen (11) des Blechformteiles (10) vorzugsweise unter den Bedingungen eines Preßsitzes aufweist.

7. Thermische Armaturensicherung zum automatischen Absperren von Leitungen nach Patentanspruch 6, dadurch gekennzeichnet, daß sich der Stößel (21) parallel zu seiner Längsachse einseitig an der auf der Seite der Ausnehmung (13) befindlichen Verbreiterung (11) des Blechformteiles (10) abstützt.

## Claims

1. Thermal safety device for automatically blocking pipes, especially gas pipes, in the event temperature increases in an impermissible manner, with a metallic closing element (16) situated in a casing (1), where the closing element (16) is kept in open position under the force exercised by a closing spring (14), which acts in closing direction, by means of a detecting element which includes a thermal solder (22), and where a guide pin (12) forms a slideway directed to the seat (8) in which the closing spring (14) is situated, altogether placed inside the casing (1) as axial extension of said seat (8) with guide pin (12), characterized in that the closing spring (14) in tense condition sits to a great extent inside a blind hole (17) at the closing element (16), which has a throat that serves as a control edge (20), and that such control edge (20) under the action of a ram (21), which is part of the detecting element and rests on the one side on a thermal solder (22) that sits close to the internal wall of casing (1) and on the other side on the external surface of the closing element (16) in the area of the control edge (20), so that the area around the control edge (20) is out-of-center, in open position and under the force exercised by the closing spring (14) sits close to a click-stop edge (24), whereat in the event the thermal solder (22) melts off the ram (21) changes its position so that the control edge (20) is no longer sitting close to the click-stop edge (24), and the closing element (16) - under the action of the closing spring (14) switches over into closed position, with the closing spring (14) serving as a guide for the closing element (16).

2. Thermal safety device for automatically blocking pipes according to patent claim 1, charakterized in that the throat, which acts as a control edge (20), in the blind hole (17) is aligned on the end of the closing element (16) facing away from the seat (8), and the external diameter of the closing element (16) in the area of the control edge (20) is substantially smaller than the diameter of the seat (8).

3. Thermal safety device for automatically blocking pipes according to patent claims 1 or 2, charakterized in that the guide pin (12) is formed by a metal molding (10), which, at the end facing away from the closing element (16), is connected by means of widening (11) on both sides preferably by compression with the casing (1), whereby the widened parts (11) each form a bearing shoulder (15) for the closing spring (14).

4. Thermal safety device for automatically blocking pipes according to patent claim 3, charakterized in that the metal molding (10) has a click-stop edge (24).

5. Thermal safety device for automatically blocking pipes according to one of the patent claims 1 to 3, charakterized in that the click-stop edge (24) is formed by the end of the closing spring (14) facing away from the seat (8), whereby the guide pin(12) has at least one recess(13) for the end of the closing spring (14) facing away from the seat (8) to click on to.

6. Thermal safety device for automatically blocking pipes according to one of the patent claims 3 to 5, charakterized in that the casing (1) has two guide grooves (9) opposite each other for the accommodation of the widened parts (11) of the metal molding (10), preferably under the conditions of a force fit.

7. Thermal safety device for automatically blocking pipes according to patent claim 6, charakterized in that the ram (21) is propped, parallel to its longitudinal axis, on one side on the widened part (11) of the metal molding (10) situated on the side of the recess(13).

## Revendications

1. Dispositif de sécurité thermique pour robinetterie destiné à bloquer automatiquement des conduites, notamment des conduites de gaz, en cas d'augmentation inadmissible de la température, muni d'un organe de fermeture (16) métallique se trouvant dans un boîtier (1), l'organe de fermeture (16) étant maintenu en position ouverte suite à la force exercée par un ressort de fermeture (14) agissant dans le sens de fermeture au moyen d'un capteur présentant une soudure thermique, et muni d'un mandrin de guidage (12) se trouvant dans le boîtier (1) dans le prolongement axial d'un logement (8) se trouvant à l'intérieur de celui-ci et formant une glissière orientée vers le logement (8) destinée au ressort de fermeture (14) disposé sur celui-ci, caractérisé par le fait que, lorsqu'il est tendu, le ressort de fermeture (14) se trouve dans le fond d'un perçage à trou borgne (17) de l'organe de fermeture (16) présentant un rétrécissement servant de bord de manoeuvre (20), et que le bord de manoeuvre (20) est appliqué, en position ouverte sous l'action du ressort de fermeture (14) contre un bord d'enclenchement (24), sous l'action d'un poussoir (21) associé au capteur qui s'appuie, d'une part, contre une soudure thermique (22) adjacente à la paroi intérieure du boîtier (1) et, d'autre part, contre la surface extérieure de l'organe de fermeture (16) dans le domaine du bord de manoeuvre (20) de telle façon que le domaine du bord de manoeuvre (20) s'écarte du centre, tandis que la soudure thermique (22) fond en raison du changement d'emplacement du poussoir (21) inhérent à cela, le bord de manoeuvre (20) n'est plus appliqué contre le bord d'enclenchement (24) si bien que l'organe de fermeture (16) prend sa position de fermeture sous l'action du ressort de fermeture (14), le ressort de fermeture (14) servant de guidage pour le corps de fermeture (16).

2. Dispositif de sécurité thermique pour robinetterie destiné à bloquer automatiquement des conduites selon la revendication 1, caractérisé par le fait que le rétrécissement servant de bord de manoeuvre (20) est disposé dans le perçage à trou borgne (17) à l'extrémité de l'organe de fermeture (16) opposé au logement (8), et que le diamètre extérieur de l'organe de fermeture (16) est, dans le domaine du bord de manoeuvre (20), sensiblement inférieur au diamètre du logement (8).

3. Dispositif de sécurité thermique pour robinetterie destiné à bloquer automatiquement des conduites selon la revendication 1 ou 2, caractérisé par le fait que le mandrin de guidage (12) est formé par une pièce moulée de tôle (10) reliée au boîtier (1) à son extrémité opposée à l'organe de fermeture (16) au moyen d'élargissements (11) situés des deux côtés, de préférence par pressage, les élargissements (11) formant en outre à chaque fois un épaulement d'appui (15) pour le ressort de fermeture (14).

4. Dispositif de sécurité thermique pour robinetterie destiné à bloquer automatiquement des conduites selon la revendication 3, caractérisé par le fait que la pièce moulée de tôle (10) présente le bord d'enclenchement (24).

5. Dispositif de sécurité thermique pour robinetterie destiné à bloquer automatiquement des conduites selon l'une des revendications 1 à 3, caractérisé par le fait que le bord d'enclenchement (24) est formé par l'extrémité du ressort de fermeture (14) opposée au logement (8), le mandrin de guidage (12) présentant au moins un creux (13) dans lequel vient s'enclencher l'extrémité du ressort de fermeture (14) opposée au logement (8).

6. Dispositif de sécurité thermique pour robinetterie destiné à bloquer automatiquement des conduites selon l'une des revendications 3 à 5, caractérisé par le fait que le boîtier (1) présente deux rainures de guidage (9) opposées destinées à accueillir les élargissements (11) de la pièce moulée de tôle (10), de préférence dans les conditions d'un ajustage serré.

7. Dispositif de sécurité thermique pour robinetterie destiné à bloquer automatiquement des conduites selon la revendication 6, caractérisé par le fait que le poussoir (21) s'appuie parallèlement à son axe longitudinal d'un seul côté contre l'élargissement (11) de la pièce moulée de tôle (10) se trouvant du côté du creux (13).
